# EUROPEAN PATENT SPECIFICATION

(11) **EP 2 999 765 B1**
(45) Date of publication and mention of the grant of the patent: **04.03.2020**
(21) Application number: 14801869.0
(22) Date of filing: 20.05.2014
(51) Int. Cl.: C09K 8/508, C09K 8/88

(54) **PROPPANT AND METHOD OF PROPPING A SUBTERRANEAN FRACTURE**
STÜTZMITTEL UND VERFAHREN ZUM STÜTZEN EINER UNTERIRDISCHEN FRAKTUR
AGENT DE SOUTÈNEMENT ET PROCÉDÉ DE SOUTÈNEMENT D'UNE FRACTURE SOUTERRAINE

(30) Priority: 23.05.2013 US 201361826616 P; 05.12.2013 US 201361912298 P
(43) Date of publication of application: 30.03.2016
(73) Proprietor: SABIC Global Technologies B.V., 4612 PX Bergen op Zoom (NL)
(72) Inventor: HOSSAN, Robert J., Selkirk, New York 12158 (US); HAGENAARS, Arno C., NL-4612 PX Bergen op Zoom (NL); BASTUBA, Brian, Chicago, Illinois 60614 (US)
(74) Representative: Lang, Johannes
(86) International application number: PCT/US2014/038717
(87) International publication number: WO 2014/189883

(56) References cited:
- US-A1- 2006 048 943
- US-A1- 2006 048 944
- US-A1- 2007 246 214
- US-A1- 2009 146 109
- US-A1- 2009 255 668
- US-A1- 2011 278 011
- MARK A. PARKER ET AL: "New Proppant for Hydraulic Fracturing Improves Well Performance and Decreases Environmental Impact of Hydraulic Fracturing Operations", SPE EASTERN REGIONAL MEETING, 1 January 2012 (2012-01-01), XP055333978, DOI: 10.2118/161344-MS

## Description

### BACKGROUND OF THE INVENTION

Hydrocarbon-producing subterranean wells are often stimulated by hydraulic fracturing treatments in which a fracturing fluid is pumped into a portion of a subterranean formation at high pressure to fracture the formation. Particulate solids, such as sand, man-made ceramic particles, or polymeric particles, are suspended in the fracturing fluid and then deposited in the fractures. These "proppant" particles serve to prevent the fractures from fully closing, and thereby facilitate extraction of hydrocarbons from the formation.

To improve the permeability of propped fractures, it is desirable to place just enough proppant in the fracture to keep it open without fully packing the fracture. This can be accomplished by using a partial monolayer of proppant, which is a partial single layer of proppant particles with significant gaps between particles. Brittle proppants such as graded sand and ceramics are generally unsuitable for a partial monolayer because the closure stress of the fracture walls on the particles cause them to break apart, forming fines which can fill the spaces between the larger particles and reduce permeability.

One advantage of polymeric proppants over conventional proppants such as graded sand and ceramics is the ability of a polymeric proppant to undergo plastic deformation rather than brittle fragmentation under stress. This plastic deformation reduces or eliminates fine particle formation and maintains more open channels. Plastic deformation also increases the area of the particle in contact with the fracture wall which reduces the point pressure on the particle and reduces the depth to which the particle can be embedded in the fracture wall. However, to function effectively as a proppant, the polymeric material must be able to withstand the typical closure stresses at the typical well temperatures encountered, for example 27.6 megapascals (4,000 pounds per square inch) at 93.3 °C (200 °F), or else the fracture will continue to close. Of course, the proppant must also be resistant to the hydrocarbons being extracted from the formation. US 2006/0048944 A1 discloses methods of forming high porosity propped fractures in subterranean formations, wherein slurries comprising a fracturing fluid, proppant particulates, and a weighting agent are used.

Blends of polyamide and poly(phenylene ether) have been demonstrated to meet the material property requirements for proppants. See, for example, M. A. Parker, K. Ramurthy, P. W. Sanchez, "New Proppant for Hydraulic Fracturing Improves Well Performance and Decreases Environmental impact of Hydraulic Fracturing Operations", SPE161344, presented at the Society of Petroleum Engineers (SPE) Eastern Regional Meeting, Lexington, Kentucky, October 3-5, 2012. Proppants based on polyamide/poly(phenylene ether) blends are commercially available, but there is a desire to improve the porosity of propped fractures prepared using such proppants.

### BRIEF SUMMARY OF EMBODIMENTS OF THE INVENTION

One embodiment is according to claim 1 a proppant for use in fracturing a subterranean formation, wherein the proppant is characterized by a mean particle size of 0.4 to 1.8 millimeters, a particle size standard deviation less than or equal to 70% of the mean particle size, and a mean aspect ratio of 1:1 to 2:1; wherein the proppant comprises particles comprising a thermoplastic composition comprising the product of melt blending components comprising at least 35 weight percent of a polyamide, and at least 20 weight percent of a poly(phenylene ether); wherein all weight percents are based on the total weight of the thermoplastic composition.

Another embodiment is according to claim 8 a method of propping a fracture in a subterranean formation, the method comprising: introducing a proppant into the fracture; wherein the proppant is characterized by a mean particle size of 0.4 to 1.8 millimeters, a particle size standard deviation less than or equal to 70% of the mean particle size, and a mean aspect ratio of 1:1 to 2:1; wherein the proppant comprises particles comprising a thermoplastic composition comprising the product of melt blending components comprising at least 35 weight percent of a polyamide, and at least 20 weight percent of a poly(phenylene ether); wherein all weight percents are based on the total weight of the thermoplastic composition.

These and other embodiments are described in detail below.

### BRIEF DESCRIPTION OF THE DRAWINGS

Figure 1 presents particle size and shape information for the Example 1 proppant.
Figure 2 presents particle size and shape information for the Example 2 proppant.
Figure 3 presents particle size and shape information for the Example 3 proppant.

### DETAILED DESCRIPTION OF THE INVENTION

The present inventors have determined that the porosity of propped fractures can be increased by utilizing a proppant characterized by a mean particle size of 0.4 to 1.8 millimeters, a particle size standard deviation less than or equal to 70% of the mean particle size, and a mean aspect ratio of 1:1 to 2:1. The proppant comprises particles comprising a thermoplastic composition that is the product of melt blending components comprising 35 to 80 weight percent of a polyamide, and 20 to 65 weight percent of a poly(phenylene ether); wherein all weight percents are based on the total weight of the thermoplastic composition.

The proppant is characterized by a mean particle size of 0.4 to 1.8 millimeters. Within this range, the mean particle size can be 0.4 to 1.5 millimeters, specifically 0.5 to 1.2 millimeters. The proppant is further characterized by a particle size standard deviation less than or equal to 70% of the mean particle size. Within this limit, the particle size standard deviation can be less than or equal to 40%, specifically less than or equal to 20%, more specifically less than or equal to 10% of the mean particle size. In some embodiments, the particle size standard deviation can be 5 to 70%, specifically 5 to 40%, more specifically 5 to 20%, still more specifically 5 to 10% of the mean particle size. The proppant is further characterized by a mean aspect ratio of 1:1 to 2:1. As used herein, "aspect ratio" refers to the ratio of the longest particle dimension to the smallest particle dimension. Within the range of 1:1 to 2:1, the aspect ratio can be 1:1 to 1.7:1, specifically 1:1 to 1.4:1. Equipment to simultaneously determine particle size and shape characteristics is commercially available as, for example, the CAMSIZER™ and CAMSIZER™ XT Dynamic Image Analysis Systems from Retsch Technology, and the QICPIC™ Particle Size and Shape Analyzer from Sympatec.

The components used to prepare the thermoplastic composition include a polyamide. Suitable polyamides include polyamide-6, polyamide-6,6, polyamide-4,6, polyamide-11, polyamide-12, polyamide-6,10, polyamide-6,12, polyamide-6/6,6, polyamide-6/6,12, polyamide-MXD,6 (where "MXD" is meta-xylylenediamine), polyamide-6,T, polyamide-6,I, polyamide-6/6,T, polyamide-6/6,I, polyamide-6,6/6,T, polyamide-6,6/6,I, polyamide-6/6,T/6,I, polyamide-6,6/6,T/6,I, polyamide-6/12/6,T, polyamide-6,6/12/6,T, polyamide-6/12/6,I, polyamide-6,6/12/6,I, polyamide-9T, and combinations thereof. In some embodiments, the polyamide is polyamide-6, polyamide-6,6, or a combination thereof. In some embodiments, the polyamide is polyamide-6,6.

The thermoplastic composition comprises the polyamide in an amount of 35 to 80 weight percent, based on the total weight of the thermoplastic composition. Within this range, the polyamide amount can be 35 to 70 weight percent, more specifically 35 to 69.5 weight percent.

In addition to the polyamide, the components used to prepare the thermoplastic composition include a poly(phenylene ether). Suitable poly(phenylene ether)s include those comprising repeating structural units having the formula 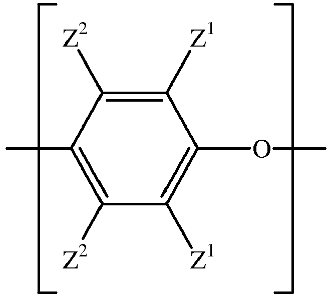 wherein each occurrence of Z¹ is independently halogen, unsubstituted or substituted C₁-C₁₂ hydrocarbyl provided that the hydrocarbyl group is not tertiary hydrocarbyl, C₁-C₁₂ hydrocarbylthio, C₁-C₁₂ hydrocarbyloxy, or C₂-C₁₂ halohydrocarbyloxy wherein at least two carbon atoms separate the halogen and oxygen atoms; and each occurrence of Z is independently hydrogen, halogen, unsubstituted or substituted C₁-C₁₂ hydrocarbyl provided that the hydrocarbyl group is not tertiary hydrocarbyl, C₁-C₁₂ hydrocarbylthio, C₁-C₁₂ hydrocarbyloxy, or C₂-C₁₂ halohydrocarbyloxy wherein at least two carbon atoms separate the halogen and oxygen atoms. As used herein, the term "hydrocarbyl", whether used by itself, or as a prefix, suffix, or fragment of another term, refers to a residue that contains only carbon and hydrogen. The residue can be aliphatic or aromatic, straight-chain, cyclic, bicyclic, branched, saturated, or unsaturated. It can also contain combinations of aliphatic, aromatic, straight chain, cyclic, bicyclic, branched, saturated, and unsaturated hydrocarbon moieties. However, when the hydrocarbyl residue is described as substituted, it may, optionally, contain heteroatoms over and above the carbon and hydrogen members of the substituent residue. Thus, when specifically described as substituted, the hydrocarbyl residue can also contain one or more carbonyl groups, amino groups, hydroxyl groups, or the like, or it can contain heteroatoms within the backbone of the hydrocarbyl residue. As one example, Z¹ can be a din-butylaminomethyl group formed by reaction of a terminal 3,5-dimethyl-1,4-phenyl group with the di-n-butylamine component of an oxidative polymerization catalyst.

In some embodiments, the poly(phenylene ether) has an intrinsic viscosity of 0.25 to 1 deciliter per gram measured by Ubbelohde viscometer at 25°C in chloroform. Within this range, the poly(phenylene ether) intrinsic viscosity can be 0.3 to 0.65 deciliter per gram, more specifically 0.35 to 0.5 deciliter per gram, even more specifically 0.4 to 0.5 deciliter per gram.

In some embodiments, the poly(phenylene ether) is essentially free of incorporated diphenoquinone residues. In the context, "essentially free" means that less than 1 weight percent of poly(phenylene ether) molecules comprise the residue of a diphenoquinone. As described in U.S. Patent No. 3,306,874 to Hay, synthesis of poly(phenylene ether) by oxidative polymerization of monohydric phenol yields not only the desired poly(phenylene ether) but also a diphenoquinone as side product. For example, when the monohydric phenol is 2,6-dimethylphenol, 3,3',5,5'-tetramethyldiphenoquinone is generated. Typically, the diphenoquinone is "reequilibrated" into the poly(phenylene ether) (i.e., the diphenoquinone is incorporated into the poly(phenylene ether) structure) by heating the polymerization reaction mixture to yield a poly(phenylene ether) comprising terminal or internal diphenoquinone residues). For example, when a poly(phenylene ether) is prepared by oxidative polymerization of 2,6-dimethylphenol to yield poly(2,6-dimethyl-1,4-phenylene ether) and 3,3',5,5'-tetramethyldiphenoquinone, reequilibration of the reaction mixture can produce a poly(phenylene ether) with terminal and internal residues of incorporated diphenoquinone. However, such reequilibration reduces the molecular weight of the poly(phenylene ether). Accordingly, when a higher molecular weight poly(phenylene ether) is desired, it may be desirable to separate the diphenoquinone from the poly(phenylene ether) rather than reequilibrating the diphenoquinone into the poly(phenylene ether) chains. Such a separation can be achieved, for example, by precipitation of the poly(phenylene ether) in a solvent or solvent mixture in which the poly(phenylene ether) is insoluble and the diphenoquinone is soluble. For example, when a poly(phenylene ether) is prepared by oxidative polymerization of 2,6-dimethylphenol in toluene to yield a toluene solution comprising poly(2,6-dimethyl-1,4-phenylene ether) and 3,3',5,5'-tetramethyldiphenoquinone, a poly(2,6-dimethyl-1,4-phenylene ether) essentially free of diphenoquinone can be obtained by mixing 1 volume of the toluene solution with 1 to 4 volumes of methanol or a methanol/water mixture. Alternatively, the amount of diphenoquinone side-product generated during oxidative polymerization can be minimized (e.g., by initiating oxidative polymerization in the presence of less than 10 weight percent of the monohydric phenol and adding at least 95 weight percent of the monohydric phenol over the course of at least 50 minutes), and/or the reequilibration of the diphenoquinone into the poly(phenylene ether) chain can be minimized (e.g., by isolating the poly(phenylene ether) no more than 200 minutes after termination of oxidative polymerization). These approaches are described in U.S. Patent No. 8,025,158 to Delsman et al. In an alternative approach utilizing the temperature-dependent solubility of diphenoquinone in toluene, a toluene solution containing diphenoquinone and poly(phenylene ether) can be adjusted to a temperature of 25°C, at which diphenoquinone is poorly soluble but the poly(phenylene ether) is soluble, and the insoluble diphenoquinone can be removed by solid-liquid separation (e.g., filtration).

In some embodiments, the poly(phenylene ether) comprises 2,6-dimethyl-1,4-phenylene ether units, 2,3,6-trimethyl-1,4-phenylene ether units, or a combination thereof. In some embodiments, the poly(phenylene ether) comprises a poly(2,6-dimethyl-1,4-phenylene ether). In some embodiments, the poly(phenylene ether) comprises a poly(2,6-dimethyl-1,4-phenylene ether) having an intrinsic viscosity of 0.35 to 0.5 deciliter per gram, specifically 0.35 to 0.46 deciliter per gram, measured by Ubbelohde viscometer at 25°C in chloroform.

The poly(phenylene ether) can comprise molecules having aminoalkyl-containing end group(s), typically located in a position ortho to the hydroxy group. Also frequently present are tetramethyldiphenoquinone (TMDQ) end groups, typically obtained from 2,6-dimethylphenol-containing reaction mixtures in which tetramethyldiphenoquinone by-product is present. The poly(phenylene ether) can be in the form of a homopolymer, a copolymer, a graft copolymer, an ionomer, or a block copolymer, as well as combinations thereof.

The thermoplastic composition comprises the poly(phenylene ether) in an amount of 20 to 65 weight percent, based on the total weight of the thermoplastic composition. Within this range, the poly(phenylene ether) amount can be 25 to 55 weight percent, specifically 30 to 45 weight percent.

In some embodiments, a compatibilizing agent is used to facilitate formation of a compatibilized blend of the polyamide and the poly(phenylene ether). As used herein, the term "compatibilizing agent" refers to a polyfunctional compound that interacts with the poly(phenylene ether), the polyamide, or both. This interaction can be chemical (for example, grafting) and/or physical (for example, affecting the surface characteristics of the dispersed phases). In either instance the resulting polyamide-poly(phenylene ether) blend exhibits improved compatibility, particularly as evidenced by enhanced impact strength, mold knit line strength, and/or tensile elongation. As used herein, the expression "compatibilized blend" refers to compositions that have been physically and/or chemically compatibilized with a compatibilizing agent, as well as blends of poly(phenylene ether)s and polyamides that are compatibilized without the use of a compatibilizing agent, as is the case, for example, when compatibilization is derived from compatibility-enhancing dibutylaminomethyl substituents on the poly(phenylene ether).

Examples of compatibilizing agents that can be employed include liquid diene polymers, epoxy compounds, oxidized polyolefin wax, quinones, organosilane compounds, polyfunctional compounds, functionalized poly(phenylene ether)s, and combinations thereof. Compatibilizing agents are further described in U.S. Patent Nos. 5,132,365 to Gallucci, and 6,593,411 and 7,226,963 to Koevoets et al.

In some embodiments, the compatibilizing agent comprises a polyfunctional compound. Polyfunctional compounds that can be employed as a compatibilizing agent are typically of three types. The first type of polyfunctional compound has in the molecule both (a) a carbon-carbon double bond or a carbon-carbon triple bond and (b) at least one carboxylic acid, anhydride, amide, ester, imide, amino, epoxy, orthoester, or hydroxy group. Examples of such polyfunctional compounds include maleic acid; maleic anhydride; fumaric acid; glycidyl acrylate, itaconic acid; aconitic acid; maleimide; maleic hydrazide; reaction products resulting from a diamine and maleic anhydride, maleic acid, fumaric acid, and the like; dichloro maleic anhydride; maleic acid amide; unsaturated dicarboxylic acids (for example, acrylic acid, butenoic acid, methacrylic acid, ethylacrylic acid, pentenoic acid, decenoic acids, undecenoic acids, dodecenoic acids, linoleic acid, and the like); esters, acid amides or anhydrides of the foregoing unsaturated carboxylic acids; unsaturated alcohols (for example, alkanols, crotyl alcohol, methyl vinyl carbinol, 4-pentene-1-ol, 1,4-hexadiene-3-ol, 3-butene-1,4-diol, 2,5-dimethyl-3-hexene-2,5-diol, and alcohols of the formula CₙH₂ₙ₋₅OH, CₙH₂ₙ₋₇OH and CₙH₂ₙ₋₉OH, wherein n is a positive integer from 10 to 30); unsaturated amines resulting from replacing from replacing the -OH group(s) of the above unsaturated alcohols with -NH₂ group(s); functionalized diene polymers and copolymers; and combinations comprising one or more of the foregoing. In some embodiments, the compatibilizing agent comprises maleic anhydride and/or fumaric acid.

The second type of polyfunctional compatibilizing agent has both (a) a group represented by the formula (OR) wherein R is hydrogen or an alkyl, aryl, acyl or carbonyl dioxy group and (b) at least two groups each of which can be the same or different selected from carboxylic acid, acid halide, anhydride, acid halide anhydride, ester, orthoester, amide, imido, amino, and various salts thereof. Typical of this group of compatibilizing agents are the aliphatic polycarboxylic acids, acid esters, and acid amides represented by the formula:

(R^{I}O)ₘR'(COOR^{II})ₙ(CONR^{III}R^{IV})ₛ

wherein R' is a linear or branched chain, saturated aliphatic hydrocarbon having 2 to 20, or, more specifically, 2 to 10, carbon atoms; R^{I} is hydrogen or an alkyl, aryl, acyl, or carbonyl dioxy group having 1 to 10, or, more specifically, 1 to 6, or, even more specifically, 1 to 4 carbon atoms; each R^{II} is independently hydrogen or an alkyl or aryl group having 1 to 20, or, more specifically, 1 to 10 carbon atoms; each R^{III} and R^{IV} are independently hydrogen or an alkyl or aryl group having 1 to 10, or, more specifically, 1 to 6, or, even more specifically, 1 to 4, carbon atoms; m is equal to 1 and (n + s) is greater than or equal to 2, or, more specifically, equal to 2 or 3, and n and s are each greater than or equal to zero and wherein (OR^{I}) is alpha or beta to a carbonyl group and at least two carbonyl groups are separated by 2 to 6 carbon atoms. Obviously, R^{I}, R^{II}, R^{III}, and R^{IV} cannot be aryl when the respective substituent has less than 6 carbon atoms.

Suitable polycarboxylic acids include, for example, citric acid, malic acid, and agaricic acid, including the various commercial forms thereof, such as for example, the anhydrous and hydrated acids; and combinations comprising one or more of the foregoing. In some embodiments, the compatibilizing agent comprises citric acid. Illustrative of esters useful herein include, for example, acetyl citrate, monostearyl and/or distearyl citrates, and the like. Suitable amides useful herein include, for example, N,N'-diethyl citric acid amide; N-phenyl citric acid amide; N-dodecyl citric acid amide; N,N'-didodecyl citric acid amide; and N-dodecyl malic acid. Derivatives include the salts thereof, including the salts with amines and the alkali and alkaline metal salts. Examples of suitable salts include calcium malate, calcium citrate, potassium malate, and potassium citrate.

The third type of polyfunctional compatibilizing agent has in the molecule both (a) an acid halide group and (b) at least one carboxylic acid, anhydride, ester, epoxy, orthoester, or amide group, preferably a carboxylic acid or anhydride group. Examples of compatibilizing agents within this group include trimellitic anhydride acid chloride, chloroformyl succinic anhydride, chloroformyl succinic acid, chloroformyl glutaric anhydride, chloroformyl glutaric acid, chloroacetyl succinic anhydride, chloroacetylsuccinic acid, trimellitic acid chloride, and chloroacetyl glutaric acid. In some embodiments, the compatibilizing agent comprises trimellitic anhydride acid chloride.

The foregoing compatibilizing agents can be added directly to the melt blend or pre-reacted with either or both of the poly(phenylene ether) and the polyamide, as well as with any other resinous materials employed in the preparation of the compatibilized polyamide-poly(phenylene ether) blend. With many of the foregoing compatibilizing agents, particularly the polyfunctional compounds, even greater improvement in compatibility is found when at least a portion of the compatibilizing agent is pre-reacted, either in the melt or in a solution of a suitable solvent, with all or a part of the poly(phenylene ether). It is believed that such pre-reacting may cause the compatibilizing agent to react with and consequently functionalize the poly(phenylene ether). For example, the poly(phenylene ether) can be pre-reacted with maleic anhydride to form an anhydride-functionalized poly(phenylene ether) that has improved compatibility with the polyamide compared to a non-functionalized poly(phenylene ether).

When a compatibilizing agent is employed in the preparation of the thermoplastic composition, the amount used will be dependent upon the specific compatibilizing agent chosen and the specific polymeric system to which it is added. In some embodiments, the compatibilizing agent amount is 0.1 to 4 weight percent, specifically 0.2 to 3 weight percent, more specifically 0.5 to 2 weight percent, based on the total weight of the thermoplastic composition.

The thermoplastic composition can, optionally, further comprise an impact modifier. Impact modifiers can be block copolymers containing alkenyl aromatic repeating units, for example, A-B diblock copolymers and A-B-A triblock copolymers having of one or two alkenyl aromatic blocks A (blocks having alkenyl aromatic repeating units), which are typically styrene blocks, and a rubber block, B, which is typically an isoprene or butadiene block. The butadiene block can be partially or completely hydrogenated. Mixtures of these diblock and triblock copolymers can also be used as well as mixtures of non-hydrogenated copolymers, partially hydrogenated copolymers, fully hydrogenated copolymers and combinations of two or more of the foregoing. A-B and A-B-A copolymers include, but are not limited to, polystyrene-polybutadiene, polystyrene- poly(ethylene-propylene) (SEP), polystyrene-polyisoprene, poly(a-methylstyrene)-polybutadiene, polystyrene-polybutadiene-polystyrene (SBS), polystyrene-poly(ethylene-butylene)-polystyrene (SEBS), polystyrene-poly(ethylene-propylene)-polystyrene, polystyrene-polyisoprene-polystyrene (SIS), poly(alpha-methylstyrene)-polybutadiene-poly(alpha-methylstyrene), polystyrene-poly(ethylene-propylene-styrene)-polystyrene, and the like. Mixtures of the aforementioned block copolymers are also useful. Such A-B and A-B-A block copolymers are available commercially from a number of sources, including Phillips Petroleum under the trademark SOLPRENE™, Kraton Performance Polymers Inc. under the trademark KRATON™, Dexco under the trademark VECTOR™, Asahi Kasai under the trademark TUFTEC™, Total Petrochemicals under the trademarks FINAPRENE™ and FINACLEAR™, Dynasol under trademark CALPRENE™, and Kuraray under the trademark SEPTON™. In some embodiments, the impact modifier comprises a polystyrene-polybutadiene-polystyrene triblock copolymer.

Another type of impact modifier is a rubber-modified polystyrene. The rubber-modified polystyrene comprises polystyrene and polybutadiene. Rubber-modified polystyrenes are sometimes referred to as "high-impact polystyrenes" or "HIPS". In some embodiments, the rubber-modified polystyrene comprises 80 to 96 weight percent polystyrene, specifically 88 to 94 weight percent polystyrene; and 4 to 20 weight percent polybutadiene, specifically 6 to 12 weight percent polybutadiene, based on the weight of the rubber-modified polystyrene. In some embodiments, the rubber-modified polystyrene has an effective gel content of 10 to 35 percent. Suitable rubber-modified polystyrenes are commercially available as, for example, NORYL™ HIPS3190 from SABIC Innovative Plastics.

Another type of impact modifier is essentially free of alkenyl aromatic repeating units and comprises one or more moieties selected from the group consisting of carboxylic acid, anhydride, epoxy, oxazoline, and orthoester. Essentially free is defined as having alkenyl aromatic units present in an amount less than 5 weight percent, or, more specifically, less than 3 weight percent, or, even more specifically less than 2 weight percent, based on the total weight of the block copolymer. When the impact modifier comprises a carboxylic acid moiety the carboxylic acid moiety can be neutralized with an ion, preferably a metal ion such as zinc or sodium. It can be an alkylene-alkyl (meth)acrylate copolymer and the alkylene groups can have 2 to 6 carbon atoms and the alkyl group of the alkyl (meth)acrylate can have 1 to 8 carbon atoms. This type of polymer can be prepared by copolymerizing an olefin, for example, ethylene and propylene, with various (meth)acrylate monomers and/or various maleic-based monomers. The term (meth)acrylate refers to both the acrylate as well as the corresponding methacrylate analogue. Included within the term (meth)acrylate monomers are alkyl (meth)acrylate monomers as well as various (meth)acrylate monomers containing at least one of the aforementioned reactive moieties. In a one embodiment, the copolymer is derived from ethylene, propylene, or mixtures of ethylene and propylene, as the alkylene component; butyl acrylate, hexyl acrylate, or propyl acrylate as well as the corresponding alkyl (methyl)acrylates, for the alkyl (meth)acrylate monomer component, with acrylic acid, maleic anhydride, glycidyl methacrylate or a combination thereof as monomers providing the additional reactive moieties (i.e., carboxylic acid, anhydride, epoxy). Exemplary impact modifiers are commercially available from a variety of sources including DuPont under the trademarks ELVALOY™ PTW, SURLYN™, and FUSABOND™.

In some embodiments, the impact modifier comprises a rubber-modified polystyrene, a polystyrene-polybutadiene-polystyrene triblock copolymer, or a combination thereof.

When present in the thermoplastic composition, the impact modifier is used in an amount of 10 to 35 weight percent, based on the total weight of the composition. Within this range, the impact modifier amount can be 15 to 30 weight percent, specifically 20 to 25 weight percent. In some embodiments, the impact modifier comprises 10 to 20 weight percent of a rubber-modified polystyrene and 3 to 13 weight percent of a polystyrene-polybutadiene-polystyrene triblock copolymer.

The thermoplastic composition can, optionally, further comprise a mineral filler. Suitable mineral fillers include, for example, wollastonite, talc, mica, clay, and combinations thereof. Particularly suitable mineral fillers have a mean particle size of 1 to 4 micrometers.

The thermoplastic composition can, optionally, further comprise one or more additives known in the thermoplastics art. For example, the thermoplastic composition can, optionally, further comprise an additive chosen from stabilizers, lubricants, processing aids, dyes, pigments, antioxidants, anti-static agents, mineral oil, metal deactivators, curing agents, crosslinkers, and the like, and combinations thereof. When present, such additives are typically used in a total amount of less than or equal to 5 weight percent, specifically less than or equal to 3 weight percent, more specifically less than or equal to 1 weight percent, based on the total weight of the thermoplastic composition.

In a very specific embodiment of the proppant, it is characterized by a mean particle size of 0.5 to 1.2 millimeters, a particle size standard deviation less than or equal to 10% of the mean particle size, and a mean aspect ratio of 1:1 to 1.4:1; and the proppant comprises particles comprising a thermoplastic composition comprising the product of melt blending components comprising at least 35 weight percent of polyamide-6,6, at least 30 weight percent of the poly(2,6-dimethyl-1,4-phenylene ether), 10 to 20 weight percent of a rubber-modified polystyrene, 3 to 13 weight percent of a polystyrene-polybutadiene-polystyrene triblock copolymer, and 0.5 to 2 weight percent of a compatibilizing agent for the polyamide-6,6 and the poly(2,6-dimethyl-1,4-phenylene ether).

Another embodiment is a method of propping a fracture in a subterranean formation, the method comprising: introducing a proppant into the fracture; wherein the proppant is characterized by a mean particle size of 0.4 to 1.8 millimeters, a particle size standard deviation less than or equal to 70% of the mean particle size, and a mean aspect ratio of 1:1 to 2:1; wherein the proppant comprises particles comprising a thermoplastic composition comprising the product of melt blending components comprising 35 to 80 weight percent of a polyamide, and 20 to 65 weight percent of a poly(phenylene ether); wherein all weight percents are based on the total weight of the thermoplastic composition. All of the variations described above in the context of the proppant apply as well to the method of propping a fracture. For example, in some embodiments, the mean particle size is 0.5 to 1.2 millimeters. In some embodiments, the particle size standard deviation is less than or equal to 10% of the mean particle size. In some embodiments, the mean aspect ratio is 1:1 to 1.4:1.

When introduced into the fracture, the proppant can, optionally, be suspended in a fluid. Suitable fluids include, for example, drilling fluids, water, aqueous gels (including aqueous solutions of linear polymers, aqueous solutions of crosslinked polymers, and combinations thereof), viscoelastic surfactant gels, oil gels, aqueous brines, foam fluids, and oil-in-water emulsions. In some embodiments, the proppant is suspended in an aqueous brine. In some embodiments, the proppant is suspended in an aqueous solution comprising a linear polymer. When the fluid comprises an aqueous gel, the gelling agent therein can be, for example, guar gum, guar derivatives such as hydroxypropylguar (HPG) and carboxymethylhydroxypropylguar (CMHPG), cellulose derivatives such as carboxymethylcellulose (CMC) and hydroxyethylcellulose (HEC), or a combination thereof. In some embodiments, the proppant is suspended in an aqueous brine comprising a linear polymer. In some embodiments, the proppant suspended in an aqueous solution comprising a crosslinked polymer.

In a very specific embodiment of the method of propping a fracture, the proppant is characterized by a mean particle size of 0.5 to 1.2 millimeters, a particle size standard deviation less than or equal to 10% of the mean particle size, and a mean aspect ratio of 1:1 to 1.4:1; the proppant comprises particles comprising a thermoplastic composition comprising the product of melt blending components comprising at least 35 weight percent of polyamide-6,6, at least 30 weight percent of the poly(2,6-dimethyl-1,4-phenylene ether), 10 to 20 weight percent of a rubber-modified polystyrene, 3 to 13 weight percent of a polystyrene-polybutadiene-polystyrene triblock copolymer, and 0.5 to 2 weight percent of a compatibilizing agent for the polyamide-6,6 and the poly(2,6-dimethyl-1,4-phenylene ether); and introducing the proppant into the fracture comprises introducing the proppant suspended in a fluid selected from the group consisting of drilling fluids, water, aqueous gels (including aqueous solutions of linear polymers, aqueous solutions of crosslinked polymers), viscoelastic surfactant gels, oil gels, aqueous brine, foam fluids, and oil-in-water emulsions.

All ranges disclosed herein are inclusive of the endpoints.

The invention is further illustrated by the following non-limiting examples. EXAMPLES 1-7

Components used to form the thermoplastic compositions are summarized in Table 1.

**Table 1**

| Component | Description |
|---|---|
| PPE | Poly(2,6-dimethyl-1,4-phenylene ether), CAS Reg. No. 25134-01-4, having an intrinsic viscosity of about 0.45 deciliter per gram as measured in chloroform at 25°C; available as PPO™ 800 from SABIC Innovative Plastics. |
| PA | Polyamide-6,6, CAS Reg. No. 32131-17-2, having a viscosity of about 126 milliliters/gram measured in 90% formic acid according to ISO 307; available as STABAMID™ 24 FE 1 from Rhodia. |
| SBS | Butadiene-styrene block copolymer, CAS Reg. No. 9003-55-8, having a polystyrene content of about 30% and a melt flow index of about 5 grams/10 minutes, measured according to ASTM D 1238-10 at 190 °C and 5 kilogram load; available as CALPRENE™ 500 from Dynasol. |
| HIPS | Rubber-modified polystyrene, CAS Reg. No. 9003-55-8, have a melt flow index of about 2.5 grams/10 minutes, measured according to ASTM D 1238-10 at 200 °C and 5 kilogram load; available as IMPACT™ 5240 from Total Petrochemicals. |
| CA | Citric acid, CAS Reg. No. 77-92-9; obtained from Jungbunzlauer. |
| Antioxidant | Octadecyl 3,5-di-tert-butyl-4-hydroxyhydrocinnamate, CAS Reg. No. 2082-79-3; available as IRGANOX™ 1076 from BASF. |
| PA/Wollastonite | A wollastonite masterbatch containing 55 weight percent polyamide-6,6, CAS Reg. No. 32131-17-2, and 45 weight percent wollastonite, CAS Reg. No. 13983-17-0, the wollastonite having a mean particle size of about 3 micrometers; available from Clariant. |

The composition used in Examples 1-4 is summarized in Table 2, where component amounts are expressed in units of weight percent based on the total weight of the thermoplastic composition.

**Table 2**

| | Exs. 1-4 |
|---|---|
| PPE | 36.4 |
| SBS | 8.3 |
| HIPS | 15.0 |
| CA | 1.0 |
| Antioxidant | 0.3 |
| PA | 39.0 |

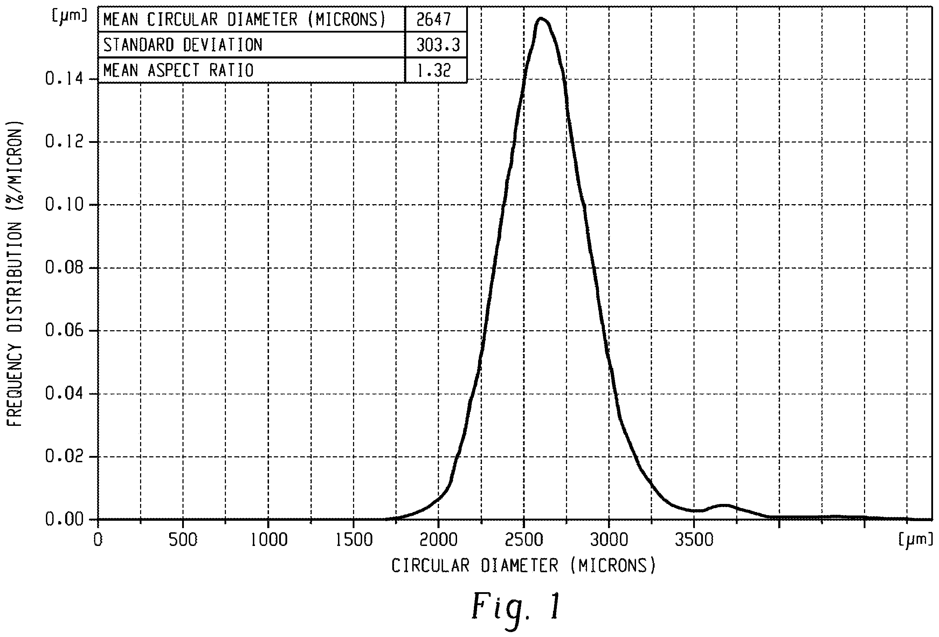

For Example 1, the thermoplastic composition was prepared by melt blending the components in a Werner-Pfleiderer 83 millimeter twin-screw extruder operating at 500 rotations/minute and a throughput of about 800 kilograms/hour. All components except the polyamide were added at the feed throat, and polyamide was introduced via a side feeder about one-third down the length of the extruder. The extruder had sixteen temperature zones. The zone temperatures from feed throat to die were 290 °C in zone 1, 300 °C in zones 2-14, and 360°C in zones 15 and 16. The die plate had 45 2.4 millimeter diameter circular openings. Strands were extruded into a water chamber containing 90 °C water. The strands were pelletized with a BKG Type UWG AH2000 underwater pelletizer having a cutter hub with twenty knives operating at 3200 rpm. Pelletizing of the extrudate while it is still molten yields ellipse-shaped pellets. The pellets were analyzed by a Retsch Technology CAMSIZER™ XT dynamic image analyzer and found to have a mean particle size of 2.65 millimeters, a standard deviation of 0.30 millimeters, and an aspect ratio of 1.32:1. A plot of the particle size distribution is presented as Figure 1.

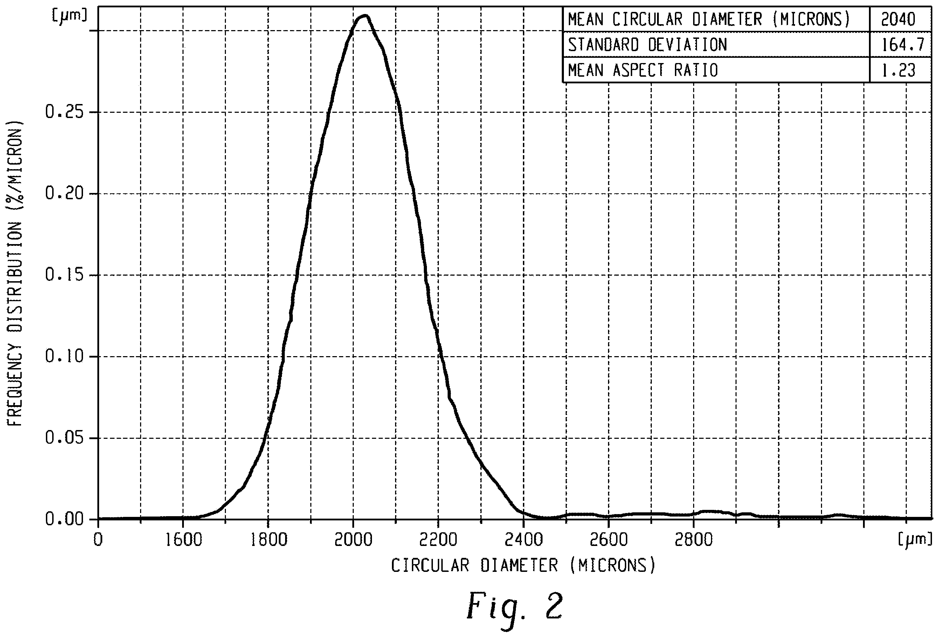

For Example 2, the Example 1 procedure was used, except that the extruder was operated at 350 rotations per minute and a throughput of about 500 kilograms/hour, and the cutter hub had sixteen knives. The resulting ellipse shaped pellets were found to have a mean particle size of 2.04 millimeters, a standard deviation of 0.16 millimeters, and an aspect ratio of 1.23:1. A particle size distribution for Example 2 is presented in Figure 2.

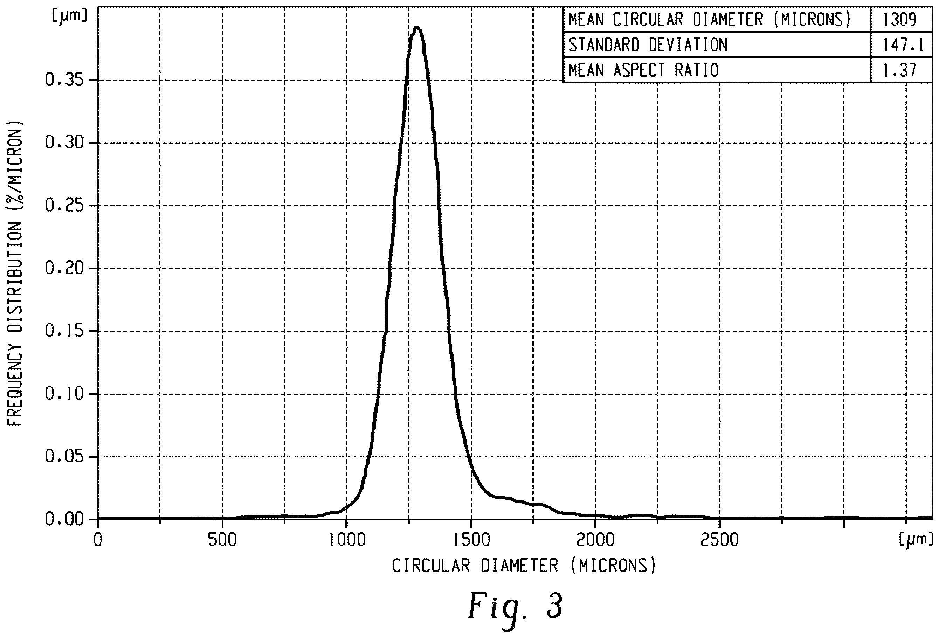

For Example 3, the granulate of Example 1 was re-extruded using a Coperion ZSK53 (53 millimeter) twin-screw extruder equipped with a stranding die with 10 holes that were 3.5 millimeters in diameter. The extruder was operated with a throughput of about 14 kilograms/hour and the resulting strands were pulled through a cooling water bath at a speed of 25 meters/minute using a sidecut pelletizer Model LSC1512 from LabTech Engineering Co. of Thailand. The pellets were analyzed by a Retsch Technology CAMSIZER™ XT dynamic image analyzer and found to have a mean particle size of 1.31 millimeters, a standard deviation of 0.15 millimeters, and an aspect ratio of 1.37:1. A plot of the particle size distribution is presented as Figure 3. Since these pellets were cut from a circular strand, they were cylindrical in shape.

For Example 4, the granulate of Example 1 was pulverized using a Dual Disk Mill Vertical Grinder manufactured by Reduction Engineering operated at ambient temperature using a P33 blade with a 1 millimeter (0.04 inch) gap. The resulting pellets were analyzed by a Retsch Technology CAMSIZER™ XT dynamic image analyzer and were found to have a mean particle size of 0.7 millimeters, a standard deviation of 0.4 millimeters, and an aspect ratio of 2:1.

To verify that the smaller particle sizes did not adversely affect the resistance to compressive forces present in subterranean fractures, the various granulates were compared in a compression test. The Example 1-3 granulates were used as generated. For Example 4, the pulverized product was first classified and only granules between 16 and 25 mesh US Sieve Series (corresponding to openings of 0.707 to 1.19 millimeters) were used in the compression test. For each granulate, a sample of granules was evenly distributed in a single layer on a 7.6 centimeter (3 inch) diameter metal disk such that between 35 and 45% of the disk area was covered with granules. A second 7.6 centimeter (3 inch) diameter metal disk was placed on the granules and the two-disk assembly was placed in a Carver hydraulic press between platens controlled at a constant temperature of 93.3 °C (200 °F). A constant force of 12,700 kilogram-force (28,000 pounds), corresponding to a pressure of 27.3 megapascals (3960 pounds per square inch) was applied to the assembly for 50 hours, after which the assembly was removed and the top disk lifted off the granules. The compressed granules were digitally imaged, and the image was analyzed to determine the total resin area after compression. The compression force divided by the resin area gave the stress on the resin after 50 hours. Table 3 lists these final material stresses. These results show that the smaller granules are no lower in compressive strength than the larger granules.

**Table 3**

| Sample | Granule Size (mm) | Final Stress (MPa) |
|---|---|---|
| Example 1 (comparative) | 2.65±0.30 | 36.87 |
| Example 2 (reference) | 2.04±0.16 | 37.17 |
| Example 3 | 1.31±0.15 | 42.38 |
| Example 4 | 0.7-1.1 | 47.35 |

The compositions of Examples 5-7 are summarized in Table 4.

**Table 4**

| | Ex. 5* | Ex. 6* | Ex. 7* |
|---|---|---|---|
| PPE | 43.9 | 59.0 | 39.0 |
| SBS | 8.3 | 0.0 | 0.0 |
| CA | 1.0 | 1.0 | 0.7 |
| Antioxidant | 0.3 | 0.0 | 0.3 |
| PA | 46.5 | 40.0 | 15.6 |
| PA/Wollastonite | 0.0 | 0.0 | 44.4 |

| | | | |
|---|---|---|---|
| *Reference | | | |

The compositions were prepared according to the procedure of Example 1, except that for Example 7, the wollastonite masterbatch was added with the polyamide in the downstream side feeder.

## Claims

1. A proppant for use in fracturing a subterranean formation,
wherein the proppant is **characterized by**
a mean particle size of 0.4 to 1.8 millimeters,
a particle size standard deviation less than or equal to 70% of the mean particle size, and
a mean aspect ratio of 1:1 to 2:1, as determined by dynamic image analysis;
wherein the proppant comprises particles comprising a thermoplastic composition comprising the product of melt blending components comprising
at least 35 weight percent of a polyamide, and
at least 20 weight percent of a poly(phenylene ether);
wherein all weight percents are based on the total weight of the thermoplastic composition.

2. The proppant of claim 1, wherein the particle size standard deviation is less than or equal to 10% of the mean particle size.

3. The proppant of claim 1 or 2, wherein the polyamide comprises polyamide-6,6.

4. The proppant of any of claims 1-3, wherein the poly(phenylene ether) comprises 2,6-dimethyl-1,4-phenylene ether units, 2,3,6-trimethyl-1,4-phenylene ether units, or a combination thereof.

5. The proppant of any one of claims 1-4, wherein the thermoplastic further comprises 10 to 35 weight percent of an impact modifier, and wherein the impact modifier comprises 10 to 20 weight percent of a rubber-modified polystyrene and 3 to 13 weight percent of a polystyrene-polybutadiene-polystyrene triblock copolymer.

6. The proppant of any of claims 1-5, further comprising 5 to 40 weight percent of a mineral filler comprising wollastonite, talc, mica, clay, or a combination thereof; wherein the mineral filler has a mean particle size of 1 to 4 micrometers.

7. The proppant of claim 1,
wherein the proppant is **characterized by**
a mean particle size of 0.5 to 1.2 millimeters,
a particle size standard deviation less than or equal to 10% of the mean particle size, and
a mean aspect ratio of 1:1 to 1.4:1;
wherein the proppant comprises particles comprising a thermoplastic composition comprising the product of melt blending components comprising
at least 35 weight percent of polyamide-6,6,
at least 30 weight percent of the poly(2,6-dimethyl-1,4-phenylene ether),
10 to 20 weight percent of a rubber-modified polystyrene,
3 to 13 weight percent of a polystyrene-polybutadiene-polystyrene triblock copolymer, and
0.5 to 2 weight percent of a compatibilizing agent for the polyamide-6,6 and the poly(2,6-dimethyl-1,4-phenylene ether).

8. A method of propping a fracture in a subterranean formation, the method comprising:
introducing a proppant into the fracture;
wherein the proppant is **characterized by**
a mean particle size of 0.4 to 1.8 millimeters,
a particle size standard deviation less than or equal to 70% of the mean particle size, and
a mean aspect ratio of 1:1 to 2:1, as determined by dynamic image analysis;
wherein the proppant comprises particles comprising a thermoplastic composition comprising the product of melt blending components comprising
at least 35 weight percent of a polyamide, and
at least 20 weight percent of a poly(phenylene ether);
wherein all weight percents are based on the total weight of the thermoplastic composition.

9. The method of claim 8, wherein the particle size standard deviation is less than or equal to 10% of the mean particle size.

10. The method of claim 8 or 9, wherein said introducing a proppant into the fracture comprises introducing the proppant suspended in a fluid selected from the group consisting of drilling fluids, water, aqueous gels, viscoelastic surfactant gels, oil gels, aqueous brines, foam fluids, and oil-in-water emulsions.

11. The method of any of claims 8-10, wherein said introducing a proppant into the fracture comprises introducing the proppant suspended in an aqueous brine.

12. The method of any of claims 8-11, wherein said introducing a proppant into the fracture comprises introducing the proppant suspended in an aqueous solution comprising a linear polymer.

13. The method of any of claims 8-12, wherein said introducing a proppant into the fracture comprises introducing the proppant suspended in an aqueous brine comprising a linear polymer.

14. The method of any of claims 8-13, wherein said introducing a proppant into the fracture comprises introducing the proppant suspended in an aqueous solution comprising a crosslinked polymer.

15. The method of claim 8,
wherein the proppant is **characterized by**
a mean particle size of 0.5 to 1.2 millimeters,
a particle size standard deviation less than or equal to 10% of the mean particle size, and
a mean aspect ratio of 1:1 to 1.4:1;
wherein the proppant comprises particles comprising a thermoplastic composition comprising the product of melt blending components comprising
at least 35 weight percent of polyamide-6,6,
at least 30 weight percent of the poly(2,6-dimethyl-1,4-phenylene ether),
10 to 20 weight percent of a rubber-modified polystyrene,
3 to 13 weight percent of a polystyrene-polybutadiene-polystyrene triblock copolymer, and
0.5 to 2 weight percent of a compatibilizing agent for the polyamide-6,6 and the poly(2,6-dimethyl-1,4-phenylene ether); and
wherein said introducing a proppant into the fracture comprises introducing the proppant suspended in a fluid selected from the group consisting of drilling fluids, water, aqueous gels, viscoelastic surfactant gels, oil gels, aqueous brine, foam fluids, and oil-in-water emulsions.

## Patentansprüche

1. Stützmittel zur Verwendung beim Aufbrechen einer unterirdischen Formation,
wobei das Stützmittel durch eine mittlere Teilchengröße von 0,4 bis 1,8 Millimeter, eine Teilchengrößen-Standardabweichung von weniger als oder gleich 70% der mittleren Teilchengröße und ein mittleres Aspektverhältnis von 1:1 bis 2:1 wie durch dynamische Bildanalyse bestimmt, gekennzeichnet ist;
wobei das Stützmittel Teilchen umfasst, die eine thermoplastische Zusammensetzung umfassen, die das Produkt eines Schmelzmischens von Komponenten umfasst, die wenigstens 35 Gewichtsprozent eines Polyamids und wenigstens 20 Gewichtsprozent eines Poly(phenylenether)s umfassen;
wobei alle Gewichtsprozente auf das Gesamtgewicht der thermoplastischen Zusammensetzung bezogen sind.

2. Stützmittel nach Anspruch 1, wobei die Teilchengrößen-Standardabweichung weniger als oder gleich 10% der mittleren Teilchengröße ist.

3. Stützmittel nach Anspruch 1 oder 2, wobei das Polyamid Polyamid-6,6 umfasst.

4. Stützmittel nach irgendeinem der Ansprüche 1 bis 3, wobei der Poly(phenylenether) 2,6-Dimethyl-1,4-phenylenethereinheiten, 2,3,6-Trimethyl-1,4-phenylenethereinheiten oder eine Kombination davon umfasst.

5. Stützmittel nach irgendeinem der Ansprüche 1 bis 4, wobei die thermoplastische Zusammensetzung ferner 10 bis 35 Gewichtsprozent eines Schlagzähmodifikators umfasst, und wobei der Schlagzähmodifikator 10 bis 20 Gewichtsprozent eines kautschukmodifizierten Polystyrols und 3 bis 13 Gewichtsprozent eines Polystyrol-Polybutadien-Polystyrol-Triblock-Copolymers umfasst.

6. Stützmittel nach irgendeinem der Ansprüche 1 bis 5, ferner umfassend 5 bis 40 Gewichtsprozent eines mineralischen Füllstoffs, umfassend Wollastonit, Talk, Glimmer, Ton oder eine Kombination davon; wobei der mineralische Füllstoff eine mittlere Teilchengröße von 1 bis 4 Mikrometer aufweist.

7. Stützmittel nach Anspruch 1,
wobei das Stützmittel durch eine mittlere Teilchengröße von 0,5 bis 1,2 Millimeter, eine Teilchengrößen-Standardabweichung von weniger als oder gleich 10% der mittleren Teilchengröße und ein mittleres Aspektverhältnis von 1:1 bis 1,4:1 gekennzeichnet ist;
wobei das Stützmittel Teilchen umfasst, die eine thermoplastische Zusammensetzung umfassen, die das Produkt eines Schmelzmischens von Komponenten umfasst, die wenigstens 35 Gewichtsprozent Polyamid-6,6,
wenigstens 30 Gewichtsprozent des Poly(2,6-dimethyl-1,4-phenylenether)s,
10 bis 20 Gewichtsprozent eines kautschukmodifizierten Polystyrols,
3 bis 13 Gewichtsprozent eines Polystyrol-Polybutadien-Polystyrol-Triblock-Copolymers und
0,5 bis 2 Gewichtsprozent eines Verträglichkeitsmachers für das Polyamid-6,6 und den Poly(2,6-dimethyl-1,4-phenylenether) umfassen.

8. Verfahren zum Abstützen einer Fraktur in einer unterirdischen Formation, wobei das Verfahren umfasst:
Einbringen eines Stützmittels in die Fraktur;
wobei das Stützmittel durch eine mittlere Teilchengröße von 0,4 bis 1,8 Millimeter, eine Teilchengrößen-Standardabweichung von weniger als oder gleich 70% der mittleren Teilchengröße und ein mittleres Aspektverhältnis von 1:1 bis 2:1 wie durch dynamische Bildanalyse bestimmt, gekennzeichnet ist;
wobei das Stützmittel Teilchen umfasst, die eine thermoplastische Zusammensetzung umfassen, die das Produkt eines Schmelzmischens von Komponenten umfasst, die wenigstens 35 Gewichtsprozent eines Polyamids und wenigstens 20 Gewichtsprozent eines Poly(phenylenether)s umfassen;
wobei alle Gewichtsprozente auf das Gesamtgewicht der thermoplastischen Zusammensetzung bezogen sind.

9. Verfahren nach Anspruch 8, wobei die Teilchengrößen-Standardabweichung weniger als oder gleich 10% der mittleren Teilchengröße ist.

10. Verfahren nach Anspruch 8 oder 9, wobei das Einbringen eines Stützmittels in die Fraktur das Einbringen des Stützmittels umfasst, das in einem Fluid suspendiert ist, das aus der Gruppe ausgewählt ist, die aus Bohrfluiden bzw. Bohrspülungen bzw. Bohrflüssigkeiten, Wasser, wässrigen Gelen, viskoelastischen Tensidgelen, Ölgelen, wässrigen Salzlösungen, Schaumfluiden und Öl-in-Wasser-Emulsionen besteht.

11. Verfahren nach irgendeinem der Ansprüche 8 bis 10, wobei das Einbringen eines Stützmittels in die Fraktur das Einbringen des in einer wässrigen Salzlösung suspendierten Stützmittels umfasst.

12. Verfahren nach irgendeinem der Ansprüche 8 bis 11, wobei das Einbringen eines Stützmittels in die Fraktur das Einbringen des Stützmittels, das in einer wässrigen Lösung suspendiert ist, die ein lineares Polymer umfasst, umfasst.

13. Verfahren nach irgendeinem der Ansprüche 8 bis 12, wobei das Einbringen eines Stützmittels in die Fraktur das Einbringen des Stützmittels, das in einer wässrigen Salzlösung suspendiert ist, die ein lineares Polymer umfasst, umfasst.

14. Verfahren nach irgendeinem der Ansprüche 8 bis 13, wobei das Einbringen eines Stützmittels in die Fraktur das Einbringen des Stützmittels, das in einer wässrigen Lösung suspendiert ist, die ein vernetztes Polymer umfasst, umfasst.

15. Verfahren nach Anspruch 8,
wobei das Stützmittel durch eine mittlere Teilchengröße von 0,5 bis 1,2 Millimeter, eine Teilchengrößen-Standardabweichung von weniger als oder gleich 10% der mittleren Teilchengröße und ein mittleres Aspektverhältnis von 1:1 bis 1,4:1 gekennzeichnet ist;
wobei das Stützmittel Teilchen umfasst, die eine thermoplastische Zusammensetzung umfassen, die das Produkt eines Schmelzmischens von Komponenten umfasst, die wenigstens 35 Gewichtsprozent Polyamid-6,6,
wenigstens 30 Gewichtsprozent des Poly(2,6-dimethyl-1,4-phenylenether)s,
10 bis 20 Gewichtsprozent eines kautschukmodifizierten Polystyrols,
3 bis 13 Gewichtsprozent eines Polystyrol-Polybutadien-Polystyrol-Triblock-Copolymers und
0,5 bis 2 Gewichtsprozent eines Verträglichkeitsmachers für das Polyamid-6,6 und den Poly(2,6-dimethyl-1,4-phenylenether) umfassen; und
wobei das Einbringen eines Stützmittels in die Fraktur das Einbringen des Stützmittels umfasst, das in einem Fluid suspendiert ist, das aus der Gruppe ausgewählt ist, die aus Bohrfluiden bzw. Bohrspülungen bzw. Bohrflüssigkeiten, Wasser, wässrigen Gelen, viskoelastischen Tensidgelen, Ölgelen, wässriger Salzlösung, Schaumfluiden und Öl-in-Wasser-Emulsionen besteht.

## Revendications

1. Agent de soutènement pour une utilisation lors de la fracturation d'une formation souterraine,
l'agent de soutènement étant **caractérisé par**
une granulométrie moyenne de 0,4 à 1,8 millimètre,
un écart-type de la distribution granulométrique inférieur ou égal à 70 % de la granulométrie moyenne, et
un rapport d'aspect moyen de 1:1 à 2:1, tel que déterminé par analyse dynamique d'image ;
l'agent de soutènement comprenant des particules comprenant une composition thermoplastique comprenant le produit du mélange à l'état fondu de composants comprenant
au moins 35 pourcents en poids d'un polyamide, et
au moins 20 pourcents en poids d'un poly(phénylène éther) ;
tous les pourcentages en poids étant rapportés au poids total de la composition thermoplastique.

2. Agent de soutènement selon la revendication 1, dans lequel l'écart-type de la distribution granulométrique est inférieur ou égal à 10 % de la granulométrie moyenne.

3. Agent de soutènement selon la revendication 1 ou 2, dans lequel le polyamide comprend du polyamide-6,6.

4. Agent de soutènement selon l'une des revendications 1 à 3, dans lequel le poly(phénylène éther) comprend des motifs 2,6-diméthyl-1,4-phénylène éther, des motifs 2,3,6-triméthyl-1,4-phénylène éther, ou une combinaison de ceux-ci.

5. Agent de soutènement selon l'une des revendications 1 à 4, dans lequel le thermoplastique comprend en outre 10 à 35 pourcents en poids d'un modifiant choc, et dans lequel le modifiant choc comprend 10 à 20 pourcents en poids d'un polystyrène modifié par du caoutchouc et 3 à 13 pourcents en poids d'un copolymère tribloc polystyrène-polybutadiène-polystyrène.

6. Agent de soutènement selon l'une des revendications 1 à 5, comprenant en outre 5 à 40 pourcents en poids d'une charge minérale comprenant de la wollastonite, du talc, du mica, de l'argile, ou une combinaison de ceux-ci, la charge minérale ayant une granulométrie moyenne de 1 à 4 micromètres.

7. Agent de soutènement selon la revendication 1, l'agent de soutènement étant **caractérisé par**
une granulométrie moyenne de 0,5 à 1,2 millimètre,
un écart-type de la distribution granulométrique inférieur ou égal à 10 % de la granulométrie moyenne, et
un rapport d'aspect moyen de 1:1 à 1,4:1 ;
l'agent de soutènement comprenant des particules comprenant une composition thermoplastique comprenant le produit du mélange à l'état fondu de composants comprenant
au moins 35 pourcents en poids de polyamide-6,6,
au moins 30 pourcents en poids du poly(2,6-diméthyl-1,4-phénylène éther),
10 à 20 pourcents en poids d'un polystyrène modifié par du caoutchouc,
3 à 13 pourcents en poids d'un copolymère tribloc polystyrène-polybutadiène-polystyrène, et
0,5 à 2 pourcents en poids d'un agent de compatibilisation pour le polyamide-6,6 et le poly(2,6-diméthyl-1,4-phénylène éther).

8. Procédé de soutènement d'une fracture dans une formation souterraine, le procédé comprenant :
l'introduction d'un agent de soutènement dans la fracture ;
l'agent de soutènement étant **caractérisé par**
une granulométrie moyenne de 0,4 à 1,8 millimètre,
un écart-type de la distribution granulométrique inférieur ou égal à 70 % de la granulométrie moyenne, et
un rapport d'aspect moyen de 1:1 à 2:1, tel que déterminé par analyse dynamique d'image ;
l'agent de soutènement comprenant des particules comprenant une composition thermoplastique comprenant le produit du mélange à l'état fondu de composants comprenant
au moins 35 pourcents en poids d'un polyamide, et
au moins 20 pourcents en poids d'un poly(phénylène éther) ;
tous les pourcentages en poids étant rapportés au poids total de la composition thermoplastique.

9. Procédé selon la revendication 8, dans lequel l'écart-type de la distribution granulométrique est inférieur ou égal à 10 % de la granulométrie moyenne.

10. Procédé selon la revendication 8 ou 9, dans lequel ladite introduction d'un agent de soutènement dans la fracture comprend l'introduction de l'agent de soutènement en suspension dans un fluide choisi dans le groupe consistant en les fluides de forage, l'eau, les gels aqueux, les gels tensioactifs viscoélastiques, les gels huileux, les saumures aqueuses, les fluides mousses et les émulsions de type aqueux.

11. Procédé selon l'une des revendications 8 à 10, dans lequel ladite introduction d'un agent de soutènement dans la fracture comprend l'introduction de l'agent de soutènement en suspension dans une saumure aqueuse.

12. Procédé selon l'une des revendications 8 à 11, dans lequel ladite introduction d'un agent de soutènement dans la fracture comprend l'introduction de l'agent de soutènement en suspension dans une solution aqueuse comprenant un polymère linéaire.

13. Procédé selon l'une des revendications 8 à 12, dans lequel ladite introduction d'un agent de soutènement dans la fracture comprend l'introduction de l'agent de soutènement en suspension dans une saumure aqueuse comprenant un polymère linéaire.

14. Procédé selon l'une des revendications 8 à 13, dans lequel ladite introduction d'un agent de soutènement dans la fracture comprend l'introduction de l'agent de soutènement en suspension dans une solution aqueuse comprenant un polymère réticulé.

15. Procédé selon la revendication 8,
dans lequel l'agent de soutènement est **caractérisé par**
une granulométrie moyenne de 0,5 à 1,2 millimètre,
un écart-type de la distribution granulométrique inférieur ou égal à 10 % de la granulométrie moyenne, et
un rapport d'aspect moyen de 1:1 à 1,4:1 ;
l'agent de soutènement comprenant des particules comprenant une composition thermoplastique comprenant le produit du mélange à l'état fondu de composants comprenant
au moins 35 pourcents en poids de polyamide-6,6,
au moins 30 pourcents en poids du poly(2,6-diméthyl-1,4-phénylène éther),
10 à 20 pourcents en poids d'un polystyrène modifié par du caoutchouc,
3 à 13 pourcents en poids d'un copolymère tribloc polystyrène-polybutadiène-polystyrène, et
0,5 à 2 pourcents en poids d'un agent de compatibilisation pour le polyamide-6,6 et le poly(2,6-diméthyl-1,4-phénylène éther), et
dans lequel ladite introduction d'un agent de soutènement dans la fracture comprend l'introduction de l'agent de soutènement en suspension dans un fluide choisi dans le groupe consistant en les fluides de forage, l'eau, les gels aqueux, les gels tensioactifs viscoélastiques, les gels huileux, une saumure aqueuse, les fluides mousses et les émulsions de type aqueux.
